# EUROPÄISCHE PATENTSCHRIFT

(11) **EP 0 235 642 B1**
(45) Veröffentlichungstag und Bekanntmachung des Hinweises auf die Patenterteilung: **28.04.1993**
(21) Anmeldenummer: 87102025.1
(22) Anmeldetag: 13.02.1987
(51) Int. Cl.: F02C 7/18, F04D 29/58

(54) **Einrichtung zur Belüftung von Rotorbauteilen für Verdichter von Gasturbinentriebwerken**
Arrangement for the aeration of compressor rotor parts of gas turbine power units
Dispositif pour l'aération des éléments du rotor pour compresseurs des propulseurs à turbine à gaz

(30) Priorität: 28.02.1986 DE 3606598; 12.08.1986 DE 3627306
(43) Veröffentlichungstag der Anmeldung: 09.09.1987
(73) Patentinhaber: MTU MOTOREN- UND TURBINEN-UNION MÜNCHEN GMBH, D-80976 München (DE)
(72) Erfinder: Liebl, Josef, Dipl.-Ing., D-8060 Dachau (DE)

(56) Entgegenhaltungen:
- EP-A- 0 141 770
- EP-A- 0 170 938
- DE-A- 1 601 534
- DE-A- 2 947 439
- GB-A- 1 217 807
- GB-A- 2 018 362
- GB-A- 2 108 202
- GB-A- 2 151 715

## Beschreibung

Es bereitet nach wie vor Schwierigkeiten, ein wirksames Belüftungskonzept von Rotorbauteilen für Verdichter von Gasturbinentriebwerken zu schaffen, das an der Rotorrückseite eine erhebliche Absenkung der Sekundärluft- und damit auch der Bauteiltemperaturen gestattet.

Herkömmliche Belüftungsausführungen, die z.B. die Luftentnahme für die Rotorbelüftung zwischen der letzten Rotor- und Statorstufe nabenseitig besitzen, weisen aufgrund des Verdichter-Temperaturprofiles eine entsprechend höhere Entnahmetemperatur auf. Durch Luftreibung zwischen den rotierenden und stehenden Bauteilen erfolgt dann meist noch eine relativ hohe Sekundäraufheizung bzw. Aufheizung der dem Verdichterendbereich entzogenen Druckluft bzw. Steuerluft, welche Aufheizung zu unnötig hohen Bauteiltemperaturen sowie Risiken bei der angestrebten Radialspaltoptimierung führt.

Der entscheidende Nachteil dieser Lösungen ist, daß eine Erhöhung der Lebensdauer in den meisten Fällen nur durch Aufdicken der rotierenden Bauteile oder durch den Einsatz hochwertiger Werkstoffe eingehalten werden kann.

Bei einem älteren Vorschlag, der eine zusätzliche Belüftung des Rotorinnenraumes, z.B. durch Öffnungen an der Rotorrückseite vorsieht, ist es von großem Nachteil, daß die Belüftungstemperatur aufgrund der Sekundärluftaufheizung extrem hoch ist und daß die benötigte Luftmenge, bedingt durch das Spaltverhalten einer vorgeschalteten labyrinthartigen Rotorhauptdichtung, insbesondere während des instationären Betriebes, nicht im gewünschten Umfang bereitgestellt werden kann.

Dem Oberbegriff des Patentanspruchs 1 ist eine aus der DE-A 29 47 439 bekannte Einrichtung zugrunde gelegt. Im bekannten Fall wird eine Optimierung der Dichtungsqualität durch Versorgung und Kühlung der labyrinthartigen Rotor-Hauptdichtung mittels stromab des Axial-Diffusors entnommener Druckluft angestrebt. Dabei ist zwischen einem stationären Wandteil der Hauptdichtung und einem radial unterhalb des Axial-Diffusors liegenden Abschnitt des Brennkammer-Gehäuses eine Kammer ausgebildet, die mittels im Gehäuseabschnitt zusätzlich angeordneter, radialer Bohrungen mit der Druckluft versorgt ist und die über weitere radiale Bohrungen mit dem Dichtspalt in Verbindung steht. Da aufgrund dieser Bauweise der äußere Ringraum gegenüber dem inneren Ringraum im wesentlichen abgesperrt wird, wäre im äußeren Ringraum eine sogenannte "Null-Luftströmung" zu erwarten, die dort zu erhöhter Luftreibung und Bauteilaufheizung führen würde, wenn nicht als begleitende Maßnahme die Ventilation des äußeren Ringraums über die axialen Öffnungen und den Ringspalt -zwischen Lauf- und Leitgitter der letzten Verdichterstufe - vorgesehen wäre.

In einem aus der GB-A- 2018 362 bekannten Fall soll u.a. Kühlluft der betreffenden Hochdruckturbine zugeführt werden, indem stromab des Leitgitters der letzten Axialverdichterstufe entommene Hochdruckluft zunächst über einen Teil des Sekundärkanals, zwischen Flammrohr und Gehäuse der Brennkammer, geführt wird und von dort in einen weiteren Ringraum gelangt, aus dem sie über geeignete düsenartige Kanäle -stromabwärtig- gegen die Radscheibe geblasen und den zu kühlenden Laufschaufeln zugeführt werden soll.

Dabei soll ferner zwichen dem Gehäuse der Brennkammer mit Wandteilen für den weiteren Ringraum auf der einen Seite und einer verhältnismäßig weitlaufigen trommelförmigen Rotorwand des Verdichters und der Turbine auf der anderen Seite ein Ringkammer ausgebildet sein, mit der die Kühlluft aus dem Bereich der Turbinenradscheibe - praktisch über die gesamte Rotorlänge des Gasgenerators hinweg - stromaufwärtig abströmen soll, um sie - über einen Ringspalt - der letzten Verdichterstufe zuzuführen.

Gerade entlang der Rotorrückseite (letzte Radscheiben) des Axialverdichters dürfte im bekannten Fall eine verhältnismäßig hohe Bauteilaufheizung als Ursache rotorseitig verursachter Luftreibung zu erwarten sein (hoher Kammerdruck), allenfalls dürfte ein merklicher Kühleffekt nur unter Beiziehung extrem großer zu verarbeitender Luftmengen in die Wege geleitet werden können.

Der Erfindung liegt die Aufgabe zugrunde, ein Gasturbinentriebwerk nach dem Oberbegriff des Patentanspruchs 1 anzugeben, welche bei verhältnismäßig einfachem Aufbau eine geforderte vergleichsweise niedrige Belüftungstemperatur und selbst bei schroffen Lastwechseln immer eine ausreichende Belüftungsmenge gewährleistet.

Im Rahmen der Aufgabe soll ferner ein weiterer Beitrag zur Schaufelspaltoptimierung geleistet werden.

Die gestellte Aufgabe ist mit den Merkmalen des Kennzeichnungsteils des Patentanspruchs 1 erfindungsgemäß gelöst.

Mithin kann eine mengenmäßig eingestellte Rezirkulation der Druckluft vorgesehen werden, die durch die Anordnung der axialen Öffnungen unter Ausnutzung des Druckanstieges im zur axial letzten Stufe des Verdichters gehörenden Leitgitter und des anschließenden Axialdiffusors ermöglicht wird.

Die Größe der zuzuführenden Luftmenge, und damit der Öffnungs- oder Bohrungsquerschnitte, kann entsprechend der Wärmeerzeugung durch Luftreibung ausgerichtet und durch Temperatur- und Festigkeitsrechnungen der betroffenen Rotorbauteile optimiert werden.

Vorteilhafte Ausgestaltungen der Erfindung ergeben sich aus den Merkmalen der Patentansprüche 2 bis 12.

Ausführungsbeispiele der Erfindung sind nachfolgend anhand der Zeichnungen erläutert; es zeigen:
- Fig. 1: die prinzipielle Darstellung der Einrichtung zur Kühlung bzw. Belüftung am Verdichterende eines Gasturbinentriebwerks mit Aufteilung des zu belüftenden Ringraumes durch eine Dichtung in einen äußeren und einen inneren Teil, in Form eines Teillängsschnitts,
- Fig. 2: einen stirnseitigen Ausschnitt des zum Brennkammeraußengehäuse gehörenden, unterhalb des Lauf- und Leitgitters liegenden Abschnitts mit den als Bohrungen ausgebildeten axialen Öffnungen und
- Fig. 3: eine weitere als axialer Teillängsschnitt dargestellte Variante am Axialverdichterende eines Gasturbinentriebwerks mit den Ringraum in einen äußeren und inneren Teil aufteilender Rotorhauptdichtung, deren rotierender Teil an einer Rotortragscheibe ausgebildet ist, worin der äußere Teil des Ringraums über einen Kanal, zwischen Axialleitgitter und -diffusor und feststehenden Teil der Dichtung, mit den axialen Öffnungen im Außengehäuse der Brennkammer in Verbindung steht.

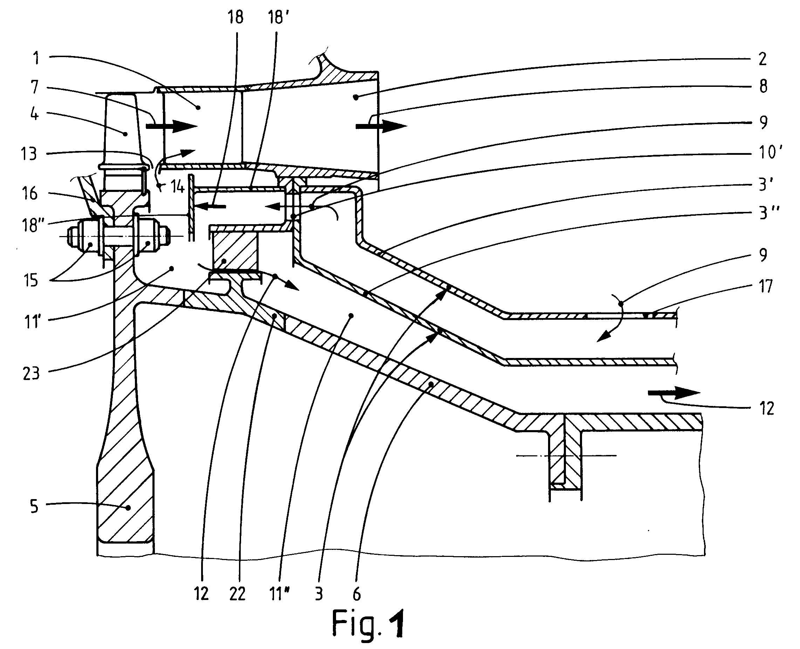

Gemäß Fig. 1 weist die Einrichtung zur Verdichterrotor- und Turbinenkühlung am Axialverdichter eines Gasturbinentriebwerkes einen dem Lauf- und Leitgitter 4, 1 der letzten Verdichterstufe nachgeschalteten Axialdiffusor 2 auf.

Dabei soll eine stromab der letzten Radscheibe 5 zwischen benachbarten Rotor- und Statorbauteilen ausgebildeter äußerer Teil 11' eines Ringraums mit stets stromab des Axialdiffusors 2 entnommener Druckluft 9 beaufschlagt sein, die im äußeren Teil 11' in zwei Teilströme 12,14 zerfällt; der eine Teilstrom 14 rezirkuliert rückwärtig außen entlang der letzten Radscheibe 5 und wird dem Verdichterkanal über einen Ringspalt 13, zwischen dem Lauf- und Leitgitter 4, 1 der letzten Verdichterstufe, zugeführt; der andere Teilstrom 12 speist eine Rotor-Stator-Dichtung 22,23 aus der er als betriebsbedingter Leckluftstrom über den inneren Teil 11'' Ringraums in das Turbinen- Sekundärluftsystem zur Turbinenkühlung abfließt.

Die Druckluft 9 wird über die axialen Öffnungen 10' im einen Wandabschnitt 3'' eines hier vorzugsweise doppelwandigen Brennkammergehäuses 3 dem äußeren Teil 11' des Ringraums zugeführt; dabei schließen der eine und der andere Wandabschnitt 3';3'' des Brennkammergehäuses 3, einen mit weiteren Öffnungen 17 korrespondierenden, hier radial innen liegenden Ringkanal ein. Die Druckluft 9 bzw. Verdichteraustrittsluft gelangt gemäß Fig. 1 unter Ausnutzung des Druckanstiegs zwischen dem Eintritt 7 in das Leitgitter 1 und dem Austritt 8 des sich daran anschließenden Axialdiffusors 2 entlang feststehender Leitvorrichtungen 18 in den scheibenrückseitigen äußeren Teil 11' des Ringraums, wonach besagte Teilstromaufteilung 12,14 erfolgt.

Die Leitvorrichtungen 18 können als den axialen Öffnungen 10' nachgeschaltete Winkelbleche ausgebildet sein, von denen ein Abschnitt 18' unterhalb der Baueinheit aus Leitgitter 1 und Axialdiffusor 2 in Achsrichtung geführt und mit einem die axialen Öffnungen 10' enthaltenden radialen Teil des einen Wandabschnitts 3'' des Brennkammergehäuses 3 verbunden ist und von denen der andere Abschnitt 18'' radial in den äußeren Teil 11' des Ringraums 11 auskragt.

Nach Fig.1 wird der durch die Rotor-Stator-Dichtung in einen äußeren und inneren Teil 11',11'' aufgeteilte und zu belüftende Ringraum von außen durch das Leitgitter 1, die Leitvorrichtungen 18 und den Axialdiffusor 2, von hinten durch das doppelwandige Brennkammergehäuse 3, von innen durch einen Wellenkonus 6 und von vorne durch die letzte Rotorscheibe 5 mit den Befestigungsbolzen 15 und den Rotorschaufeln des Laufgitters 4 umschlossen. Im Ringraum erfährt die vorhandene Luftmenge durch Luftreibung eine zusätzliche Aufheizung. Die Größe der Luftreibung wird von folgenden Faktoren maßgeblich bestimmt, wie der Rotordrehzahl, der radialen Position, dem Umgebungsdruck , der Lufttemperatur und vor allem der Scheibenoberfläche (z.B. glatte Scheibenoberfläche oder Scheibe mit rotierenden Bolzen). Die in Fig. 1 dargestellten rotierenden Bolzen 15, die zur Verschraubung mit den vorderen Rotorscheiben 16 benötigt werden, können zu einer erhöhten Wärmeerzeugung innerhalb des äußeren Teils 11' des Ringraums führen. Um die damit verbundene Luftaufheizung möglichst gering zu halten, muß äußere Teil 11' des Ringraums ausreichend belüftet werden.

Die optimale Durchmischung bzw. Ausnutzung der zugeführten Menge der Druckluft 9 kann innerhalb des äußeren Teils 11' des Ringraums durch eine örtliche gezielte Beeinflussung der Luftströmung durch die feststehenden Leitvorrichtungen 18, die z.B. am Brennkammergehäuse 3 befestigt sind, geschehen. Zudem ermöglichen die Leitvorrichtungen 18 eine deutliche Reduzierung des Wärmetransportes von außen durch die Innenwand des Leitgitters 1.

Der eine Teilstrom 14, der durch den Ringspalt 13 dem Primärluftstrom bzw. der Verdichterhauptströmung - zwischen dem Laufgitter 4 und dem Axialleitgitter 1 der letzten Verdichterstufe - wieder zugeführt wird, erfährt innerhalb des Leitgitters 1 und des Axialdiffusors 2 durch die vorbeiströmende Primärluft eine rasche Beschleunigung auf die Primärluftgeschwindigkeit.

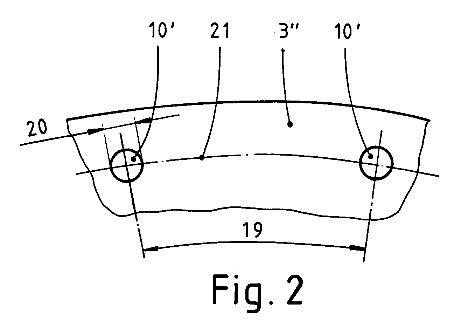

Die Aufteilung bzw. Anzahl 19 und Dimensionierung 20 der in Fig. 2 als Bohrungen dargestellten axialen Öffnungen 10' richten sich nach der erforderlichen Belüftungsmenge. Ferner soll die radiale Position 21 der axialen Öffnungen 10' mit der radialen Position der sich an der Rückseite der letzten Radscheibe 5 ausbildenden maximalen Luftreibung übereinstimmen.

Im Hinblick auf Fig. 1 kann ferner die aus dem feststehenden Teil 23 und dem rotierenden Teil 22 bestehende Dichtung mit radialem Abstand, unterhalb des axialen Abschnitts 18' der als Winkelbleche ausgebildeten Leitvorrichtungen 18 angeordnet sein, wobei der stationäre ringförmige Teil 23 der Dichtung gegenüber dem radial auskragenden Abschnitt 18'' der Leitbleche mit axialem Abstand angeordnet ist.

Die in Fig. 1 vorgenommene Zwischenschaltung der Dichtung 22, 23 ermöglicht im Wege der angegebenen Druckabsenkung im inneren Teil 11'' des Ringraums zugleich eine Druckkraftabsenkung an der Rotorrückseite, u.a. am Wellenkonus 6, so daß Axialschubbeeinträchtigungen praktisch nicht auftreten können. Im äußeren Teil 11' des Ringraums, der mit dem höheren Druckniveau beaufschlagt ist, kann somit die Belüftung und Kühlung effektiv erfolgen, und zwar insbesondere im Hinblick auf die in diesem Teil 11' des Ringraums zu erwartende, verhältnismäßig ausgeprägte Sekundärluftaufheizung. Im Hinblick auf den zuletzt genannten Sachverhalt ist es vorteilhaft, daß die axialen Öffnungen 10' in Höhe der sich im äußeren Teil 11' des Ringraums an der Rückseite der letzten Radscheibe 5 maximal ausbildenden Luftreibung über dem Umfang des Brennkammeraußengehäuses 3, an dessen hier einem Wandabschnitt 3'', verteilt angeordnet sind.

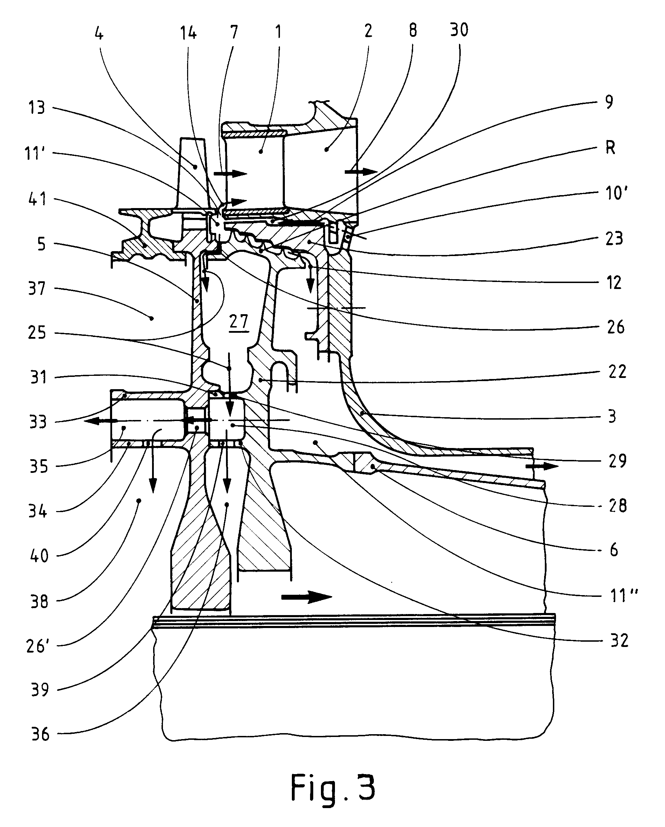

In weiterer vorteilhafter Ausgestaltung (Fig.3) kann der rotierende Teil 22 der Dichtung - hier als Rotorhauptdichtung ausgebildet - Bestandteil einer Rotortragscheibe des Verdichters sein, die der letzten Radscheibe 5 nachgeordnet ist, wobei ein Dichtungträger R am äußeren Umfangsbereich der Rotortragscheibe zugleich Abstandshalter zwischen der letzten Radscheibe 5 und der Rotortragscheibe ist, wobei der stationäre Teil 23 der Dichtung sich in axialer und Umfangsrichtung unterhalb des Axialleitgitters 1 und des Axialdiffusors 2 erstreckt sowie ferner an einem radial innen liegenden Abschnitt des Brennkammergehäuses 3 befestigt ist.

Gegebenenfalls nachteilhafte Auswirkungen hinsichtlich eines Axialschubanstiegs lassen sich durch die nachstehend näher spezifizierte Variante nach Fig. 3 völlig umgehen. Darin soll der äußere Teil 11' des Ringraums zwischen vorderen, als Abstandshalter ausgebildeten Abschnitten der Tragscheibe sowie dem stationären Teil 23 der Rotorhauptdichtung auf der einen Seite und schaufelfußseitigen Stirnflächen an der letzten Radscheibe 5 ausgebildet sein; insbesondere soll dabei der äußere Teil 11' des Ringraums mit einem gegenüber dem stationären Teil 23 der Rotor-Haupt-Dichtung sowie unterhalb der Axialleitgitter-Diffusorkombination 1, 2 befindlichen, die am Verdichteraustritt entnommene Druckluft 9 führenden Kanal 30 in Verbindung stehen, der -eintrittsseitig- über die in Höhe des Kanals 30 im radial innen liegenden Wandabschnitt des Brennkammergehäuses 3 enthaltenen axialen Öffnungen 10' mit Druckluft 9 versorgt ist; ferner steht hierbei der mit dem Ringspalt 13 kommunizierende äußere Teil 11' des Ringraums über vorzugsweise schlitzförmige Eintrittsöffnungen 26 mit einem äußeren Zwischenraum 27 zwischen der lezten Radscheibe 5 und dem als Rotortragscheibe ausgebildeten rotierenden Teil 22 der Dichtung in Verbindung, aus dem die Rotortragscheibe sowie mindestens eine weitere, z.B. die letzte Radscheibe 5, belüftet wird, wie dies im Rahmen weiterer Merkmale nachstehend weiter erläutert ist; es können also die Zwischenräume zwischen benachbarten Laufradscheiben bzw. zwischen der letzten Radscheibe der Axial-Verdichterstufe und dem als Rotortragscheibe ausgebildeten rotierenden Teil 22 der Rotor-Hauptdichtung mittels in Axialdistanzhalterungen 31,32; 33,34 der Radscheiben angeordneter Luftkammern 28, 35 in ringförmige äußere und innere Zwischenräume 27,36 bzw. 37,38 zergliedert sein, wobei die Luftkammern 28, vom äußeren Teil 11' des Ringraums aus über den äußeren ringförmigen Zwischenraum 27 mit der Entnahmeluft 25 beaufschlagt sind.

Es kann ferner die erforderliche Menge an Entnahmeluft 25 über scheibenseitige Öffnungen 26' aus ersten Luftkammern 28 weiteren Luftkammern 35 zugeführt werden, wobei die ersten und zweiten Luftkammern 28,35 über innere Öffnungen 39, in den Axialdistanzhalterungen 32, 34 mit den inneren ringförmigen Zwischenräumen 36, 38 zwecks nabenseitiger Scheibenbelüftung in Verbindung stehen.

In Fig. 3 wird die Entnahmeluft 25 über radial außen in den Axialdistanzhalterungen 31 angeordnet Öffnungen 29 aus dem äußeren ringförmigen Zwischenraum 27 einer Luftkammer 28 zugeführt.

Der entscheidende Vorteil bei den nach außen verlegten Eintrittsöffnungen 26 nach Fig. 3 liegt darin begründet, daß die "Vent"- bzw. Steuerluftzufuhr weitestgehend unabhängig von der Sekundärluftaufheizung durch Luftreibung und von dem Spaltverhalten der labyrinthartigen Rotorhauptdichtung 22, 23 bzw. R, 23 ausgeführt werden kann. Ferner kann im Wege der Gestaltung der Druckluftzufuhr, also in der Art der Führung der Druckluft 9 in den äußeren Teil 11' des Ringraums eine zusätzliche Temperaturabsenkung der zur Belüftung verwendeten Entnahmeluft 25 erzielt werden.

Die Dimensionierung der Eintrittsöffnungen 26, wie die maximale Schlitzlänge, die maximale Aussparungstiefe, die Formradien und die umfangsaufteilung bzw. maximale Anzahl der Schlitze bedarf einer festigkeitsmäßigen Auslegung. Der daraus resultierende maximale Öffnungsquerschnitt bestimmt die größtmögliche Menge an Entnahmeluft 25 und die Drücke in den ringförmigen Zwischenräumen 27,36 und in den Luftkammern, z.B. 28, innerhalb des Rotors.

Innerhalb des Äußeren ringförmigen Zwischenraums 27 bewirkt also die Menge der nach innen strömenden Entnahmeluft 25 eine Abkühlung der von außen durch Luftreibung aufgeheizten Rotorragscheibe als rotierendem Teil 22 der Dichtung. Danach strömt die Entnahmeluft 25 durch die Öffnungen 29, die vorzugsweise als Bohrungen ausgeführt werden können, in die weiter innen liegenden Luftkammern 28 ab. Ab hier wird die Entnahmeluft 25 in schon erläuterter Weise aufgeteilt.

Diese Belüftungsausführung ermöglicht für die betroffenen Rotorscheiben sowohl im stationären, als auch im instationären Betrieb eine optimale Absenkung der Scheibennabentemperaturen auf das Niveau der Scheibenkranztemperaturen, und zwar auch im Interesse der Radialspaltoptimierung über den gesamten Betriebszustand.

Ein Vorteil der angegebenen Aufteilung in die ringförmigen Zwischenräume 27,36 (Fig.3) besteht ferner darin, daß durch die geringere Druckänderung der Abzapfdruck für die Belüftung entsprechend niedrig sein kann bzw. eine ausreichend hohe Druckdifferenz an den Eintrittsöffnungen 26 vorliegt. Innerhalb der durch Radialstege in Umfangsrichtung voneinander getrennten Luftkammern 28 kann der zugeführten Entnahmeluft 25 eine bauteilbezogene Umfangsgeschwindigkeit aufgeprägt werden.

Es entsteht nämlich innerhalb der Luftkammern 28 aufgrund des erzwungenen Wirbels eine geringere Druckänderung als dies vergleichsweise in den äußeren und inneren ringförmigen Zwischenräumen 27,36 aufgrund der Gesetzmäßigkeiten des "freien Wirbels" geschieht.

Im übrigen soll auch in Fig. 3 die radiale Position der axialen Öffnungen 10' einem Radius zugeordnet sein, der im wesentlichen mit der radialen Position der sich maximal örtlich im äußeren Teil 11' des Ringraums scheibenrückseitig ausbildenden Luftreibung übereinstimmt, wie sinngemäß eingangs bereits erwähnt.

Wir im übrigen ferner aus Fig. 3 hervorgeht, können die Laufräder, ausgehend von der letzten Radscheibe in an sich bekannter Weise mittels im äußeren Umfangsbereich angeordneter Rotorabstandsringe 41 aneinander abgestützt sein.

Die Erfindung ist vorrangig für axial durchströmte Gasturbinenstrahltriebwerke von Flugzeugen geeignet ohne hierauf allerdings beschränkt zu sein.

## Patentansprüche

1. Gasturbinentriebwerk mit Einrichtungen zur Verdichterrotor- und Turbinenkühlung mit einem dem Lauf- und Leitgitter (4,1) der letzten Stufe eines Axialverdichters nachgeschalteten Axialdiffusor (2), einem stromab der letzten Radscheibe (5) des Axialverdichters zwischen einander benachbarten Rotor- und Statorbauteilen angeordneten Ringraum, einer Rotor-Statordichtung (22;23), die den Ringraum in einen äußeren und inneren Teil (11';11'') aufteilt, und die mittels am Austritt des Axialdiffusors (2) entnommener Hochdruckluft (9) beaufschlagt ist, einem Ringspalt (13) zwischen Lauf- und Leitgitter (4,1) der letzten Verdichterstufe, in einem unterhalb dieses Lauf- und Leitgitters (4,1) liegenden Abschnitt des Außengehäuses (3) der Brennkammer über dem Umfang verteilten axialen Öffnungen (10'), über die am Austritt des Axialdiffusors (2) entnommene Hochdruckluft (9) in den äußeren Teil (11') des Ringraums abströmt, aus dem sie zur Rotorkühlung über den Ringspalt (13) in den Verdichterkanal rezirkuliert, und mit einer an den inneren Teil (11'') des Ringraums angeschlossenen, vom Leckfluß aus der Dichtung (22,23) gespeisten Sekundärluftführung zur Turbine, dadurch gekennzeichnet, daß
- die axialen Öffnungen (10') in einer radialen Position über dem Umfang verteilt angeordnet sind, die mit der radialen Position der sich an der Rückseite der letzten Radscheibe (5) maximal ausbildenden Luftreibung übereinstimmt;
- die über die axialen Öffnungen (10') zugeführte Hochdruckluft (9) im äußeren Teil (11') des Ringraums in zwei Teilströme (14,12) aufgeteilt wird, wobei der eine Teilstrom (14) rückwärtig außen entlang der letzten Radscheibe (5) über den Ringspalt (13) rezirkuliert, der andere Teilstrom (12) - unter Bereitstellung der gesamten Dichtungsluftmenge - über die Dichtung (22,23) als Turbinenkühlluft dem inneren Teil (11'') des Ringraums zugeführt wird.

2. Gasturbinentriebwerk nach Anspruch 1, dadurch gekennzeichnet, daß die axialen Öffnungen (10') im einen Wandabschnitt (3'') eines doppelwandigen Brennkammeraußengehäuses (3) angeordnet sind, dem über weitere Öffnungen (17) im anderen Wandabschnitt (3') am Austritt des Axialdiffusors (2) entnommene Hochdruckluft (9) zugeführt wird.

3. Gasturbinentriebwerk nach Anspruch 1 oder 2, dadurch gekennzeichnet, daß die Druckluft (9) entlang feststehender Leitvorrichtungen (18) dem scheibenrückseitigen äußeren Teil (11') des Ringraums über die axialen Öffnungen (10') zugeführt wird.

4. Gasturbinentriebwerk nach Anspruch 1, 2 und 3, dadurch gekennzeichnet, daß die Leitvorrichtungen (18) den axialen Öffnungen (10') nachgeschaltete Winkelbleche sind, von denen ein Abschnitt (18') unterhalb der Baueinheit aus Leitgitter (1) und Axialdiffusor (2) in Achsrichtung geführt und mit einem die axialen Öffnungen (10') enthaltenen radialen Teil des einen Wandabschnitts (3'') des Brennkammeraußengehäuses (3) verbunden ist und von denen der andere Abschnitt (18'') radial in den äußeren Teil des Ringraums auskragt.

5. Gasturbinentriebwerk nach den Ansprüchen 1, 3 oder 4, dadurch gekennzeichnet, daß die Leitvorrichtungen (18) im äußeren Teil (11') des Ringraums und die Öffnungen (10') in Nachbarschaft der Leitvorrichtungen (18) sowie in miteinander korrespondierenden radialen Teilen des einen Wandabschnitts (3'') des Brennkammeraußengehäuses und der Dichtung (22, 23) angeordnet sind.

6. Gasturbinentriebwerk nach Anspruch 4, dadurch gekennzeichnet, daß die aus einem feststehenden Teil (23) und einem rotierenden Teil (22) bestehende Dichtung mit radialem Abstand gegenüber dem in Achsrichtung geführten Abschnitt (18') der Leitvorrichtungen (18) angeordnet ist, wobei der stationäre Teil (23) der Dichtung gegenüber dem radial auskragenden anderen Abschnitt (18'') der Leitvorrichtungen (18) mit axialem Abstand angeordnet ist.

7. Gasturbinentriebwerk nach Anspruch 1 dadurch gekennzeichnet, daß der äußere Teil (11') des Ringraums mittels eines sich zwischen dem Axialleitgitter (1) und dem Axialdiffusor (2) auf der einen und dem feststehenden Teil (23) der Dichtung auf der anderen Seite erstreckenden Kanals (30) über die axialen Öffnungen (10') mit der Druckluft (9) beaufschlagt ist, wobei die axialen Öffnungen (10') an der Eintrittsseite des Kanals (30) in einem Wandabschnitt Brennkammeraußengehäuses (3) angeordnet sind.

8. Gasturbinentriebwerk nach Anspruch 7 dadurch gekennzeichnet, daß der rotierende Teil (22) der Dichtung Bestandteil einer Rotortragscheibe des Axialverdichters ist, die der letzten Radscheibe (5) nachgeordnet ist, wobei ein Dichtungsträger (R) am äußeren Umfangsbereich der Rotortragscheibe zugleich Abstandshalter zwischen der letzten Radscheibe (5) und der Rotortragscheibe ist, wobei der stationäre Teil (23) der Dichtung sich in Achs- und Umfangsrichtung unterhalb des Axialleitgitters (1) und des Axialdiffusors (2) erstreckt und ferner an einem Abschnitt des Brennkammeraußengehäuses (3) befestigt ist.

9. Gasturbinentriebwerk nach Anspruch 7, dadurch gekennzeichnet, daß der äußere Teil (11') des Ringraums über schlitzförmige Eintrittsöffnungen (26) mit einem äußeren Zwischenraum (27) zwischen der letzten Radscheibe (5) und dem als Rotortragscheibe ausgebildeten rotierenden Teil (22) der Dichtung in Verbindung steht, aus dem die Rotortragscheibe sowie mindestens eine weitere, z. B. die letzte Radscheibe (5), mit Entnahmeluft (25) belüftet wird.

10. Gasturbinentriebwerk nach einem oder mehreren der Ansprüche 7 bis 9 dadurch gekennzeichnet, daß die Zwischenräume zwischen benachbarten Laufradscheiben bzw. zwischen der letzten Radscheibe (5) und dem als Rotortragscheibe ausgebildeten rotierenden Teil (22) der Dichtung mittels in Axialdistanzhalterungen (31, 32; 33, 34) der Scheiben angeordneter Luftkammern (28, 35) in äußere und innere ringförmige Zwischenräume (27, 36 bzw. 37, 38) zergliedert sind, wobei die Luftkammern (28, 35) vom äußeren Teil (11') des Ringraums aus über den äußeren ringförmigen Zwischenraum (27) mit der Entnahmeluft (25) beaufschlagt sind.

11. Gasturbinentriebwerk nach Anspruch 10, dadurch gekennzeichnet, daß die Entnahmeluft (25) aus ersten Luftkammern (28) über scheibenseitige Öffnungen (26') weiteren Luftkammern (35) zugeführt wird, wobei die ersten und die weiteren Luftkammern (28, 35) über innere Öffnungen (39, 40) in den Axialdistanzhalterungen (32, 34) mit den inneren ringförmigen Zwischenräumen (36, 38) zwecks nabenseitiger Scheibenbelüftung in Verbindung stehen.

12. Gasturbinentriebwerk nach Anspruch 10 und/oder 11, dadurch gekennzeichnet, daß der Entnahmeluft (25) innerhalb der jeweils durch Radialstege in Umfangsrichtung voneinander getrennten Luftkammern (28) eine bauteilbezogene Umfangsgeschwindigkeit aufgeprägt wird.

## Claims

1. Gas turbine engine with devices for cooling the compressor rotor and turbine with an axial diffuser (2) which is connected downstream of the rotor blade and guide baffle (4, 1) of the final stage of an axial compressor, an annular chamber disposed downstream of the final wheel disc (5) of the axial compressor between adjacent rotor and stator components, a rotor-stator seal (22; 23) which divides the annular chamber into an outer and an inner part (11'; 11''), and which is acted upon by high-pressure air (9) taken from the outlet of the axial diffuser (2), with an annular gap (13) between the rotor blade and guide baffle (4, 1) of the final compressor stage, axial apertures (10') which are in a section of the combustion chamber outer housing (3) lying below the said rotor blade and guide baffle (4, 1), are distributed over the periphery, and via which the high-pressure air (9) taken from the outlet of the axial diffuser (2) flows into the outer part (11') of the annular chamber from which it recirculates to cool the rotors via the annular gap (13) in the compressor channel, and with a secondary air supply to the turbine, which air supply is connected to the inner part (11'') of the annular chamber and is supplied with leakage flow from the seal (22; 23), characterised in that the axial apertures (10') are disposed distributed over the periphery in a radial position which coincides with the radial position of the maximum build-up of atmospheric friction at the rear of the final wheel disc (5); and in that the high-pressure air (9) delivered via the axial apertures (10') is divided in the outer part (11') of the annular chamber into two partial streams (14, 12), wherein one partial stream (14) is recirculated rearwards externally along the final wheel disc (5) via the annular gap (13) and the second partial stream (12) - preparing the entire amount of sealing air - is delivered via the seal (22, 23) to the inner part (11'') of the annular chamber as turbine cooling air.

2. Gas turbine engine according to Claim 1, characterised in that the axial apertures (10') are disposed in a wall section (3'') of a double-walled combustion chamber outer housing (3) to which high-pressure air (9) taken from the outlet of the axial diffuser (2) is delivered via further apertures (17) in the other wall section (3').

3. Gas turbine engine according to Claim 1 or 2, characterised in that the compressed air (9) is delivered along stationary guide devices (18) to the outer part (11') of the annular chamber on the rear side of the disc via the axial apertures (10').

4. Gas turbine engine according to Claims 1, 2 and 3, characterised in that the guide devices (18) are angled metal sheets which are connected downstream of the axial apertures (10') and of which one section (18') is guided below the constructional unit consisting of the guide baffle (1) and axial diffuser (2) in the axial direction and is connected to a radial part, containing the axial apertures (10'), of one wall section (3'') of the combustion chamber outer housing (3), and of which the other section (18'') projects radially into the outer part of the annular chamber.

5. Gas turbine engine according to Claim 1, 3 or 4, characterised in that the guide devices (18) are disposed in the outer part (11') of the annular chamber and the apertures (10') are disposed in the vicinity of the guide devices (18) and in corresponding radial parts of one wall section (3'') of the combustion chamber outer housing and the seal (22, 23).

6. Gas turbine engine according to Claim 4, characterised in that the seal comprising a stationary part (23) and a rotating part (22) is disposed at a radial distance with respect to the section (18') of the guide devices (18) guided in the axial direction, wherein the stationary part (23) of the seal is disposed at an axial distance with respect to the radially projecting second section (18'') of the guide devices (18).

7. Gas turbine engine according to Claim 1, characterised in that the outer part (11') of the annular chamber is acted upon by the compressed air (9) by means of a duct (30) which extends between the axial guide baffle (1) and the axial diffuser (2) on the one side and the stationary part (23) of the seal on the other side via the axial apertures (10'), wherein the axial apertures (10') are disposed at the inlet side of the duct (30) in a wall section of the combustion chamber outer housing (3).

8. Gas turbine engine according to Claim 7, characterised in that the rotating part (22) of the seal is a component of a rotor support disc of the axial compressor which is disposed downstream of the final wheel disc (5), wherein a seal support (R) at the outer peripheral area of the rotor support disc is simultaneously the spacer between the final wheel disc (5) and the rotor support disc, wherein the stationary part (23) of the seal extends in the axial and peripheral directions below the axial guide baffle (1) and the axial diffuser (2) and is furthermore secured to a section of the combustion chamber outer housing (3).

9. Gas turbine engine according to Claim 7, characterised in that the outer part (11') of the annular chamber is connected via slot-like inlet openings (26) to an outer space (27) between the final wheel disc (5) and the rotating part (22) of the seal formed as the rotor support disc, from which space the rotor support disc and at least one further, for example the final wheel disc (5), are ventilated with removed air (25).

10. Gas turbine engine according to one or more of Claims 7 to 9, characterised in that the spaces between adjacent runner discs or between the final wheel disc (5) and the rotating part (22) of the seal formed as the rotor support disc are divided by means of air chambers (28, 35) disposed in axial spacers (31, 32; 33, 34) retaining the spaces between the discs into outer and inner annular spaces (27, 36 and 37, 38) respectively, wherein the air chambers (28, 35) are acted upon by the removed air (25) from the outer part (11') of the annular chamber via the outer annular space (27).

11. Gas turbine engine according to Claim 10, characterised in that the removed air (25) from the first air chambers (28) is delivered via openings (26') on the disc side to further air chambers (35), wherein the first and the further air chambers (28, 35) are connected via inner openings (39, 40) in the axial spacers (32, 34) to the inner annular spaces (36, 38) in order to ventilate the discs on the hub side.

12. Gas turbine engine according to Claim 10 and/or 11, characterised in that a peripheral velocity specific to the structural components is imposed on the removed air (25) within the air chambers (28) separated from each other in each case by radial webs in the peripheral direction.

## Revendications

1. Propulseur à turbine à gaz comportant des dispositifs servant à refroidir le rotor du compresseur et la turbine et comprenant un diffuseur axial (2) disposé en aval de la roue à aubes et du déflecteur (4, 1) du dernier étage du compresseur, une chambre annulaire située en aval de la dernière roue (5) du compresseur axial, entre les éléments voisins du rotor et du stator, une garniture d'étanchéité (22, 23), entre rotor et stator, qui divise la chambre annulaire en deux parties, externe et interne (11', 11'') et qui est soumise à l'action de l'air à haute pression (9) soutiré à la sortie du diffuseur axial (2), une fente annulaire (13) entre les aubes du dernier étage du compresseur, et les aubages directeurs (4, 1) des orifices axiaux (10'), réparties à la périphérie d'une partie, située sous les aubages tournants et les aubages directeurs (4, 1), du boîtier externe de la chambre de combustion et à travers lesquelles l'air à haute pression (9) soutiré à la sortie du diffuseur axial (2) balaie la partie externe (11') de l'espace annulaire à partir de laquelle, pour refroidir le rotor, il revient à travers la fente annulaire (13) dans le canal du compresseur, une amenée d'air secondaire à la turbine, reliée à la partie interne (11'') de la chambre annulaire et alimentée par le courant de fuite de la garniture d'étanchéité (22, 23), caractérisé en ce que :
- les orifices axiaux (10') sont répartis sur un cercle correspondant à celui pour lequel le frottement de l'air sur la face arrière de la dernière roue (5) est maximal.
- l'air à haute pression (9) entrant dans la partie externe (11') de la chambre annulaire, à travers les orifices axiaux (10') se divise en deux flux partiels (14, 12), dont le premier (14) remonte vers l'extérieur le long de la dernière roue (5) et traverse la fente annulaire (13) pour être remis en circulation tandis que l'autre flux (12), mis à la disposition du débit total d'air à travers l'étanchéité traverse celle-ci (22, 23) pour parvenir dans la partie interne (11') de la chambre annulaire où il sert à refroidir la turbine.

2. Propulseur à turbine à gaz selon la revendication 1, caractérisé en ce que les orifices axiaux (10') sont percés dans une partie (3'') du boîtier (3), à double paroi de la chambre de combustion, d'autres ouvertures (17) pratiquées dans une autre partie (3') de la paroi amenant à l'intérieur du boîtier l'air à haute pression soutiré à la sortie du diffuseur axial (2).

3. Propulseur à turbine à gaz selon la revendication 1 ou 2, caractérisé en ce que l'air comprimé (9) traversant les orifices axiaux (10') sont des dispositifs directeurs fixes (18) de la partie externes (11') du corps arrière du disque de la chambre annulaire.

4. Propulseur à turbine à gaz selon les revendications 1, 2 et 3, caractérisé en ce que les dispositifs directeurs (18) sont constitués par des tôles pliées situées en aval des orifices (10') et qui comportent une partie (18') à direction axiale située en dessous de l'ensemble constitué par l'aubage directeur (1) et le diffuseur axial (2) et reliée à la partie radiale d'une (3'') des deux parois du boîtier de la chambre de combustion (3), tandis que l'autre partie (18'') pénètre radialement dans la partie externe de la chambre annulaire.

5. Propulseur à turbine à gaz selon la revendication 1, 3 ou 4, caractérisé en ce que les aubages directeurs (18), la partie externe (11') de la chambre annulaire et les ouvertures (10') qui leur sont voisines sont situés dans des zones correspondant au même rayon, d'une partie (3'') de la paroi externe du boîtier de la chambre du combustion d'une part, de la garniture d'étanchéité d'autre part.

6. Propulseur à turbine à gaz selon la revendication 4, caractérisé en ce que la garniture d'étanchéité constituée d'une partie fixe (23) et d'une partie tournante (22) est espacée radialement de la partie (18') à direction axiale des dispositifs directeurs (18), tandis que la partie fixe (23) de l'étanchéité se trouve placée en face et à une certaine distance axiale de l'autre partie radiale (18'') du dispositif (18).

7. Propulseur à turbine à gaz selon la revendication 1, caractérisé en ce que la partie externe (11') de la chambre annulaire reçoit l'air comprimé (9) provenant des ouvertures axiales (10') par l'intermédiaire d'un canal (30) s'étendant entre l'aubage directeur axial (1) et le diffuseur axial (2) d'une part, la partie fixe (23) de l'étanchéité d'autre part, les ouvertures (10') se situant à l'entrée de ce canal (30) dans une partie de la paroi du boîtier (3) de la chambre de combustion.

8. Propulseur à turbine selon la revendication 4, caractérisé en ce que la partie tournante (22) de l'étanchéité est un élément d'un disque porté par le rotor du compresseur axial, monté en aval du dernier disque, un palier d'étanchéité (R) étant situé à la périphérie externe du disque porté tandis qu'un espaceur est monté entre la dernière roue (5) et le disque porté, la partie fixe (23)de l'étanchéité s'étendant axialement et périphériquement en dessous de l'aubage directeur axial (1) et du diffuseur axial (2) et étant fixée sur une partie de l'enveloppe externe (3) de la chambre de combustion.

9. Propulseur à turbine à gaz selon la revendication 7, caractérisé en ce que la partie externe (11') de la chambre annulaire est reliée par des ouvertures en forme de fentes (26) à une chambre intermédiaire externe (27) délimitée par la dernière roue (5) et la partie tournante (22), constituée par un disque porté par le rotor, de l'étanchéité, l'air soutiré (25) qui traverse cette chambre ventilant le disque porté et au moins une roue, à savoir la dernière (5).

10. Propulseur à turbine à gaz selon une ou plusieurs des revendications 7 à 9, caractérisé en ce que les chambres intermédiaires situées entre roues voisines ou entre la dernière roue (5) et la partie tournante (22) de l'étanchéité en forme de disque porté par le rotor sont des chambres de passage d'air divisées, par des chambres de passage d'air (28, 35) situées à l'intérieur d'espaceurs axiaux (31, 32 ; 33, 34) reliant les roues, en chambres externes (27, 37) et internes (36, 38) les chambres de passage (28, 35) recevant l'air soutiré (25) venant de la partie externe (11') de la chambre annulaire et traversant la chambre intermédiaire annulaire externe (27).

11. Propulseur à turbine à gaz selon la revendication 10, caractérisé en ce que l'air soutiré (25) traversant les premières chambres de passage (28) arrive à travers des ouvertures (26) situées du côté des roues dans d'autres chambres de passage (35), ces chambres (28, 35) étant reliées, par des ouvertures (39, 40) des espaceurs (32, 34) aux chambres intermédiaires annulaires internes (36, 38) de manière à ventiler les roues dans leur zone axiale.

12. Propulseur à turbine à gaz selon la revendication 10 et/ou 11, caractérisé en ce que l'air soutiré (25) reçoit une vitesse périphérique déterminée par les éléments constructifs, à l'intérieur des chambres de passage (28) séparées les unes des autres, périphériquement par des cloisons radiales.
